**Europäisches Patentamt**

**European Patent Office**

**Office européen des brevets**

(19)

(11) Veröffentlichungsnummer: **0 244 602 B1**

(12)

# EUROPÄISCHE PATENTSCHRIFT

(45) Veröffentlichungstag der Patentschrift:
**16.01.91 Patentblatt 91/03**

(51) Int. Cl.⁵: **C08F 220/18, C14C 11/00,**
**// (C08F220/18, 220:06,**
**220:44, 220:14)**

(21) Anmeldenummer: **87103872.5**

(22) Anmeldetag: **17.03.87**

(54) Verfahren zur Zurichtung von Leder.

(30) Priorität: **27.03.86 DE 3610576**

(43) Veröffentlichungstag der Anmeldung:
**11.11.87 Patentblatt 87/46**

(45) Bekanntmachung des Hinweises auf die
Patenterteilung:
**16.01.91 Patentblatt 91/03**

(84) Benannte Vertragsstaaten:
**BE DE ES FR GB IT NL**

(56) Entgegenhaltungen:
**EP-A- 0 065 253**
**EP-A- 0 156 971**

(73) Patentinhaber: **BAYER AG**
**D-5090 Leverkusen 1 Bayerwerk (DE)**

(72) Erfinder: **Tork, Leo, Dr.**
**Karl-Krekeler-Strasse 11**
**D-5090 Leverkusen 1 (DE)**
Erfinder: **Vogt, Hans-Günter, Dr.**
**Bahnhofstrasse 41**
**D-4047 Dormagen (DE)**
Erfinder: **Heins, Ferdinand, Dr.**
**Scheidreef 6**
**B-2080 Kapellen (BE)**

## Beschreibung

Das Ziel einer Lederzurichtung besteht darin, dem gegerbten und gegebenenfalls gefärbten Rohleder das gewünschte Aussehen, gewünschte sensorische Eigenschaften und physikalische Echtheiten, z.B. Naß- und Trockenhaftung, Naß- und Trockenknickfestigkeit, Naß- und Trockenreibechtheit und Lösemittelbeständigkeit zu verleihen. In optimaler Weise waren diese Eigenschaften bisher nur mit Systemen zu erzielen, die zumindest in der Effektfarbe und Appretur organische Lösungsmittel enthielten. Es ist jedoch aus ökologischen und ökonomischen Gründen erforderlich geworden, die Lederzurichtung mit rein wäßrigen Systemen zu realisieren. Bisherige Versuche auf dieser Basis konnten noch nicht befriedigen, weil immer zumindest eine der geforderten Eigenschaften nicht erreicht werden konnte, oder weil die vorgeschlagene Lösung zu aufwendig war.

So wird beispielsweise in der DE-OS 3 228 128 vorgeschlagen, für die Grundierung Dispersionen zu verwenden, die mindestens 2 chemisch sehr unterschiedliche Copolymerisate eindispergiert enthalten, wovon das eine aus 30 bis 85 Gew.-% (Meth)-acrylat, 1 bis 8 Gew.-% carboxylgruppenhaltigem Comonomer und 7 bis 70 Gew.-% weiteren Monomeren und das andere aus 50 bis 95 Gew.-% Vinylidenchlorid, 10 bis 40 Gew.(Meth)-acrylat und 1 bis 5 Gew.-% eines Monomers, das wenigstens eine zur Vernetzung befähigte Gruppe enthält, aufgebaut ist. Für die Apparatur wird dann wenigstens ein weiteres von den beiden Grundierungspolymeren unterschiedliches Polymer benötigt.

Gegenstand der Erfindung ist nun ein Verfahren zur Zurichtung von Leder, dadurch gekennzeichnet, daß man für die Grundierung Acrlyatbinder mit einer Filmhärte °Shore A von 20-40 aus (a) 56-98 Gew.-% eines $C_2$-$C_8$-Alkylacrylats (b) 2-4 Gew.-% (Meth)-Acrylsäure, (c) 0-25 Gew.-% Acrylnitril, (d) 0-40 Gew.-% Methylmethacrylat und (e) 0-5 Gew.-% eines oder mehrerer weiterer Comonomere, die keine sauren, basischen oder venretzenden Gruppen aufweisen und für die Appretur Acrylatbinder mit einer Filmhärte °Shore A von 65-99 aus (a) 38-80 Gew.-% eines $C_2$-$C_8$-Alkylacrylats, (b) 2-4 Gew.-% (Meth)Acrylsäure, (c) 10-20 Gew.-% Acrylnitril, (d) 0-40 Gew.-% Methylmethacrylat und (e) 0-5 Gew.-% eines oder mehrerer weiterer Comonomere, die keine sauren, basischen oder vernetzenden Gruppen aufweisen, wobei die Acrylatbinder durch Copolymerisation der Monomeren in Gegenwart von 0,05-0,2 Gew.-% einer organischen Peroxoverbindung und 2,0-4,0 Gew.-% eines anionischen Emulgators hergestellt worden sind und die Prozentangaben sich auf die Summe von (a) bis (e) beziehen, verwendet.

Bevorzugt verwendet man für die Grundierung Acrylatbinder aus (a) 65-98 Gew.-% eines $C_2$-$C_8$-Alkylacrylats, (b) 2-4 Gew.-% (Meth)Acrylsäure, (c) 0-18 Gew.-% Acrylnitril und (d) 0-15 Gew.-% Methylmethacrylat und für die Appretur Acrylatbinder aus (a) 46-60 Gew.-% eines $C_2$-$C_8$-Alkylacrlyats, (b) 2-4 Gew.-% (Meth)Acrylsäure, (c) 12-20 Gew.-% Acrylnitril und (d) 20-34 Gew.-% Methylacrylat.

Als Komponente (a) verwendet man vorzugsweise Ethylacrylat oder n-Butylacrylat, als Komponente (b) vorzugsweise Methacrylsärue.

Vorzugsweise ist die Anwesenheit nicht-ionischer Emulgatoren zu vermeiden. Der Polymerisationsumsatz ist vorzugsweise größer als 90%, insbesondere größer als 94%, wobei für die Umsatzbestimmung einer Fehlergrenze von ± 1% anzunehmen ist.

Bevorzugt besteht das Polymer nur aus den Komponenten (a) bis (d), wobei für (a) Ethylacrylat oder n-Butylacrylat und für (b) Methacrylsäure bevorzugt sind.

Weitere Monomere (e) sind z.B. Vinylacetat, Acrylamid, Methacrylamid und Styrol.

Geeignete Peroxoverbindungen sind z.B. Acylhydroperoxide, Diacylperoxide, Alkylhydroperoxide, Dialkylperoxide und Ester wie tert.-Butylperbenzoat.

Die als Beispiele angeführten organischen Peroxoverbindungen lassen sich auch in Kombination mit geeigneten Reduktionsmitteln in bekannter Weise anwenden. Als Beispiele solcher Reduktionsmittel seien genannt : Schwefeldioxid, Alkalidisulfite, Alkali- und Ammoniumhydrogensulfite, Thiosulfat, Dithionit und Formaldehydsulfoxylat, ferner Hydroxylaminhydrochlorid, Hydrazinsulfat, Eisen(II)-sulfat, Zinn(II)-chlorid, Titan(III)-sulfat, Hydrochinon, Glucose, Ascorbinsäure und bestimmte Amine.

Bevorzugt sind Alkylhydroperoxide zusammen mit Formaldehydsulfoxylat, eingesetzt im Molverhältnis 5 :1 bis 1 :5.

Häufig empfiehlt es sich, in Gegenwart von Promotoren zu polymerisieren. Als solche eignen sich z.B. kleine Mengen von Metallsalzen, deren Kationen in mehr als einer Wertigkeitsstufe existieren können, z.B. Kupfer-, Mangan-, Eisen-, Cobalt- und Nickelsalze.

Mitunter empfiehlt es sich, die Emulsionspolymerisation in Gegenwart von Puffersubstanzen, Chelierungsmitteln und ähnlichen Zusätzen durchzuführen, deren Art und Menge dem Fachmann bekannt sind.

Beispiele anionischer Emulgatoren sind Salze höherer Fettsäuren und Harzsäuren, höhere Fettalkoholsulfate, höhere Alkylsulfonate und Alkylarylsulfonate sowie deren Kondensationsprodukte mit Formaldehyd, höhere Hydroxyalkylsulfonate, Salze der Sulfobernsteinsäureester und sulfatierter Ethylenoxidaddukte.

Für Grundierungen werden weiche Copolymerisate mit der Filmhärte °Shore A 20 bis 40, für Appreturen härtere Polymerisate mit der Filmhärte °Shore A 65 bis 99 angewendet. Die Filmhärte in Grundierung und Appretur richtet sich in bekannter Weise nach Leder- und Zurichtungstyp. Selbstverständlich kann der Härtegrad auch durch Mischen von einem weichen mit einem härten erfindungsgemäßen Copolymerisat beliebig eingestellt werden.

In einer bevorzugten Ausführungsform bei Anwendung in der Praxis werden pro 1.000 Gewichtsteile Grundierflotte 100 Gewichtsteile einer 15 gew.-%igen wäßrigen Kasein-Fettemulsion zugesetzt. Effektfarbe und Appretur enthalten pro 1.000 Gewichteilen ca. 100 bis 300 Gewichtsteile einer 2 gew.-%igen wäßrigen, thixotropen Dispersion eines gereinigten Hektorits und 40 bis 120 Gewichtsteile einer 15 gew.-%igen wäßrigen ammoniakalischen Kaseinlösung sowie bezogen auf eingesetzte 30 gew.-%ige Acrylatdispersion und 15 gew.-%ige Kaseinlösung ca. 2 bis 4 Gew.-% einer polyfunktionellen Aziridinverbindung oder 5 bis 6,5 Gew.-% 1,2,4-Triglycidyl-triazolidin-3,5-dion als Vernetzer in dem Appreturansatz und ca. 1 bis 2 Gew.-% des Aziridinvernetzers bzw. 2 bis 4 Gew.-% des Epoxidvernetzers in der Effektfarbe.

Die Effektfarben enthalten Bindemittel, die innerhalb der angegebenen Grenzen aus den gleichen Monomeren aufgebaut sind wie die erfindungsgemäßen Acrylatbinder. Bezüglich ihrer Härte liegen sie vorzugsweise zwischen dem Grundier- und dem Appreturbinder und werden insbesondere durch Mischen dieser beiden Binder hergestellt.

Selbstverständlich können auch die Grundierungen zur Verbesserung der Echtheiten mit den für die Vernetzung von Effektfarben und Appreturen geeigneten Produkten vernetzt werden. Die Dosierung, bezogen auf Polymerisatdispersion und Kaseinlösung, liegt hier bei 1 bis 4 Gew.-%.

Es wurde gefunden, daß das neue Verfahren besonders für die Zurichtung von weichen Ledern, die gemillt werden, geeignet ist. An die Zurichtschicht von Millnappa-Ledern werden besondere Ansprüche gestellt : Die Zurichtung muß millfest sein, d.h., sie darf beim Millen im Faß nicht beschädigt werden ; insbesondere muß nach dem Millen ein möglichst weiches Leder mit feinem Narbenwurf, feinem Narbenkorn und kleinen Flämen erhalten werden. Auch bei stark beschichtetem Leder, z.B. geschliffenem Möbelleder, muß das Leder natürlich und unbeschichtet erscheinen. Selbstverständlich werden gute Echtheiten verlangt, z.B. beim Möbelnappa sehr gute Naß-, Trocken- und Durchreibechtheiten.

Um diese Forderungen beim Zurichten mit üblichen Bindern zu erfüllen, werden in den Grundierungsaufträgen Bindermischungen mittleren Härtegrades (°Shore A 35 bis 50) angewendet und zur Erzielung der erforderlichen Echtheiten, insbesondere der Reibechtheiten, entweder harte Appreturen geringer Elastizität auf Collodiumbasis dünn aufgetragen (Kleintierfelle, Oberledernappa) oder hochela stische Appreturen auf Polyurethan-Basis in dicker Schicht (Möbelleder). Sollen die Leder nach dem Appreturauftrag gemillt werden, muß die Milldauer genau eingehalten werden. Millt man die Leder nämlich zu kurz, werden die Leder nicht weich genug ; millt man die Leder zu lange, kommt es bei Collodiumappreturen zur Rißbildung der Appreturschicht und bei Polyurethan-Appreturen zu einer Verspannung zwischen dem immer weicher werdenden Leder und der elastischen Appreturschicht, was schließlich zu Losnarbigkeit und Wulstigkeit der Zurichtschicht führt. Die Leder erscheinen dann plastisch überladen.

Da die erfindungsgemäßen Polymerisatdispersionen weniger kleben und ein höheres Pigmenttragevermögen besitzen sowie reibfestere Zurichtungen ergeben, können beim neuen Verfahren in der Grundierung weichere Binder und mehr Pigment angewendet werden, und darüber hinaus kann die Grundierung in dünnerer Schicht aufgetragen werden. Durch diese Umstellung in der Rezeptur werden weichere Leder mit feinerem Narbenwurf erhalten, die weniger beschichtet und daher natürlicher aussehen.

Besonders vorteilhaft - aufgrund ihres hohen Pigmenttragevermögens, ihrer hohen Transparenz und ihrer guten Trocken- und Naßhaftungen - ist die Anwendung der erfindungsgemäßen Dispersionen als Bindemittel für wäßrige Pasten organischer Pigmente in rein wäßrigen Effektfarben, insbesondere in Kombination mit einer 2 gew.-%igen wäßrigen thixotropen Dispersion eines gereinigten Hektorits. Mit diesen Effektfarben können coloristische Effekte ebenso scharf akzentuiert gespritzt oder im Walzenauftragsverfahren aufgebracht werden, wie es sonst nur mit rein organischen Systemen, z.B. auf Basis von Collodium oder Polyurethan-Lacken, möglich ist. Zur gegebenenfalls gewünschten Glanz-und Brillanzsteigerung können übliche Kaseinlösungen zugesetzt werden.

Ein besonderer Vorteil für die Filmelastizität der Effektfarbe und insbesondere für die Haftung zwischen Effektfarbe und Grundierung sowie zwischen Effektfarbe und Appretur besteht in der Möglichkeit, wesentlich höhere Bindemittelmengen in der wäßrigen Effektfarbe einsetzen zu können als das bei organischen Systemen möglich ist, ohne daß die Effektzeichnung darunter leidet. Z.B. werden für 50 Gewichtsteile organische Pigmentpaste bei Anwendung von Collodiumlacken als Bindemittel für Effektfarben ca. 7,5 bis 15 Gewichtsteile Collodium-Festsubstanz angeboten im Vergleich zu 105 bis 135 Gewichtsteilen Polymerisatfestsubstanz nach dem erfindungsgemäßen Verfahren.

3

Eine weitere Erhöhung der Filmelastizität der Effektfarbe sowie der Haftung zwischen den Zurichtschichten ist durch die Möglichkeit gegeben, die erfindungsgemäßen Dispersionen mit bekannten Epoxid- und Aziridinvernetzern zu vernetzen. Wenn z.B. die Leder vor dem Aufbringen der Effektfarbe bei hohen Temperaturen und hohem Druck geprägt oder gebügelt oder auch längere Zeit gelagert werden, erzielt man auch auf solchen stark abgeschlossenen Grundierungen durch Vernetzung eine einwandfreie Haftung zwischen den verschiedenen Zurichtschichten.

Die Filmelastizität von Effektfarbe und Appretur kann je nach Anforderung beliebig eingestellt werden, weil die Acrylatdispersionen in nahezu jedem Elastizitäts- und Weichheitsgrad hergestellt werden können, weil relativ hohe Bindermengen in der Effektfarbe eingesetzt werden können, ohne daß die Effektgebung darunter leidet und weil schließlich nicht nur die Haftung, sondern auch die Elastizität des Zurichtfilms durch Vernetzung der Dispersionen weiter angehoben werden kann.

Auch als Bindemittel in Schlußappreturen bieten die erfindungsgemäßen Polymerisatdispersionen wesentliche Vorteile :

Die Appreturen sind aminfest, hitzebeständig und lichtecht. Sie können auf jeden gewünschten Elastizitäts- und Härtegrad eingestellt werden. Zur Erreichung der erforderlichen Echtheiten können die Appreturfilme weniger hart, aber elastischer als Collodiumappreturen sein und im Vergleich zu Appreturen auf Polyurethan-Basis dünner, weicher und weniger elastisch. Die Haftung zur Grundierung bzw. Effektfarbe ist einwandfrei, auch auf stark abgeschlossenen Grundierungen, wenn man - analog zu den Effektfarben - vernetzt. Die Naß- und Trockenreibechtheiten sowie die Millfestigkeit sind hervorragend, insbesondere auch, wenn die Dispersionen vernetzt werden. Mit Kasein kann der Griff in Richtung glatt und trocken eingestellt und der Glanz erhöht werden. Weitere übliche Hilfsmittel zur Regulierung des Griffes können ohne Beeinträchtigung der übrigen Eigenschaften zugesetzt werden.

Die Zurichtung der Leder mit den erfindungsgemäß zu verwendenden Acrylatdispersionen erfolgt in an sich üblicher Weise. Die Verarbeitung kann auf vollnarbigen und geschliffenen Ledern jeder Provenienz sowie auf Lederfasermaterialien erfolgen. Die Zurichtungen werden unter Verwendung der erfindungsgemäßen Polymerisatdispersionen, handelsüblicher Deckfarbenpasten sowie von weiteren Zusätzen in an sich bekannter Weise auf die Leder aufgebracht. Das Aufbringen der Zurichtungen kann durch Spritz-, Bürst-, Plüsch-, Gieß-, Streich- oder Walzenauftragsprozesse vorgenommen werden. Die Menge der Zurichtung hängt von der Art und Vorbehandlung der Leder ab und läßt sich durch Vorversuche leicht ermitteln.

Die Grundierung wird in einem oder mehreren Aufträgen - mit Zwischentrocknen bei 60 bis 90°C innerhalb weniger Minuten - durchgeführt. Bei Lederuntersortimenten wird durch heißes Zwischenbügeln oder Narbenprägen ein gutes Verschmelzen und dadurch ein guter Abschluß der Grundierung erreicht. Anschließend können weitere Deckfarbenaufträge mit der gleichen Flotte oder mit einer dunkler eingestellten Effektfarbe erfolgen.

Durch Zugabe von Verdickungsmitteln, z.B. auf Basis von Polyglykolpolyurethanen, Vinylpyrrolidon oder hochmolekularen Copolymerisaten auf Basis Acrylsäure, läßt sich die Viskosität der Zurichtflotten regulieren, so daß sich das Eindringvermögen über die Viskositätsanhebung leicht herabsetzen läßt. Die verdickten Grundierungsflotten eignen sich aufgrund der dadurch bedingten höheren Füllwirkung und des verbesserten Filmbildevermögens besonders gut zur Zurichtung von geschliffenen Ledern.

In der folgenden Tabelle sind Richtrezepturen für Grundierungen mit den erfindungsgemäßen Acrylatdispersionen für verschiedene Ledertypen und Farbtöne aufgeführt.

**Richtrezepturen für Grundierungen mit erfindungsgemäßen Acrylatdispersionen**

(Pigmentpasten gemäß EP-A 86 354)

| Ledertyp | Kleintierfelle | | | vollnarbige Nappa | | | geschliffene Nappa | | |
|---|---|---|---|---|---|---|---|---|---|
| Schwarze Pigmentpaste (16 gew.-%ige Rußformierung) | 80 | - | - | 80 | - | - | 80 | - | - |
| Braune Pigmentpaste (55 gew.-%ige Eisenoxidformierung) | - | 100 | - | - | 100 | - | - | 100 | - |
| Weiße Pigmentpaste (65 gew.-%ige Titandioxidformierung) | - | - | 150 | - | - | 150 | - | - | 150 |
| 15 gew.-%ige wäßrige ammoniakalische Kaseinlösung | - | - | - | - | - | - | 50 | 50 | 50 |
| 15 gew.-%ige wäßrige Kasein-Fettemulsion | 100 | 100 | 100 | 100 | 100 | 100 | 100 | 100 | 100 |
| 20 gew.-%ige wäßrige Paraffin-Ölsäureemulsion | 40 | 40 | 40 | - | - | - | 0-30 | 0-30 | 0-30 |
| Wasser | 600 | 550 | 475 | 565 | 490 | 380 | auf 1000 auffüllen | | |
| Erfindungsgemäße Acrylatdispersionen 30 gew.-%ig (und Mischungen, Filmhärte °Shore A 25-40) | 180 | 210 | 235 | 235 | 290 | 350 | 290 | 350 | 460 |
| 30 gew.-%ige Mattierungspaste auf Basis Kieselsäure | - | - | - | 0-20 | 0-20 | 0-20 | 0-30 | 0-30 | 0-30 |
| mit Verdickungsmittel (Copolymerisat auf Basis Acrylsäure) je nach Saugverhalten der Leder auf Viskosität 16-22 s (gemessen im Ford-Becher mit 4 mm Düse) stellen | - | - | - | - | - | - | 40-100 | 40-100 | 40-100 |
| Gesamtauftragsmenge in g/m² in 2-4 Spritzaufträgen | 60-100 | 60-100 | 60-100 | 80-120 | 80-120 | 80-120 | 120-180 | 120-180 | 120-180 |

EP 0 244 602 B1

Die Zusammensetzung der Effektfarben mit den erfindungsgemäßen Polymerisatdispersionen für den Auftrag mit der Spritzmaschine veranschaulicht folgende Richtrezeptur :

|  | Gewichtsteile |
|---|---|
| 15 bis 20 gew.-%ige handelsübliche wäßrige Farbstofflösungen | 0- 50 |
| 15 bis 20 gew.-%ige organische Pigment- pasten (EP-A- 86 354) | 50-100 |
| 2 gew.-%ige wäßrige Dispersion von gereinigtem Hektorit | 100-300 |
| 15 gew.-%ige wäßrige ammoniakalische Kaseinlösung | 0-100 |
| mit Wasser auffüllen | auf 1000 |
| erfindungsgemäße 30 gew.-%ige Acrylat- dispersionen (auch Mischungen derselben, Filmhärte °Shore A 40-85) | 350-450 |
| Vernetzer auf Aziridin- oder Epoxidbasis z.B. 1,2,4-Triglycidyl-triazolidin-3,5-dion | 0- 27 |
|  | ca. 1000 |

Die Effektfarben können auch mittels Walzenauftragsmaschinen aufgebracht werden. Die für dieses Verfahren erforderliche Viskosität wird durch Reduzierung der Wasserzugabe eingestellt.

Nach der Grundierung oder Effektfarbe bringt man in üblicher Weise, z.B. in 1 bis 2 Spritzaufträgen mit Zwischentrocknungen bei 60 bis 90°C innerhalb weniger Minuten, die Acrylatdispersion für die abschließende Appretur auf. Je nach Ledertyp bügelt man anschließend gegebenenfalls bei 60 bis 170°C auf einer Durchlaufbügelmaschine und gegebenenfalls zum Schluß bei 60 bis 100°C unter geringem Druck (5 bis 100 bar) hydraulisch nach.

Die Appreturflotten können handelsübliche Pigmentpräparationen. Farbstofflösungen, Mattierungs- oder Griffmittel enthalten. Werden wäßrige Kaseinlösungen in größeren Anteilen zugegeben, müssen für die erforderlichen Naßechtheiten bekannte Vernetzer auf Aziridin- oder Epoxidbasis dem Appreturansatz zugesetzt werden.

Die Richtrezepturen für rein wäßrige Appreturen mit den erfindungsgemäßen Acrylatbindern haben fol-gende Zusammensetzung :

|  | Gewichtsteile |
|---|---|
| 15 bis 20 Gew.-% handelsübliche Farbstofflösungen | 0- 10 |
| 15 bis 20 Gew.-% organische Pigmentpasten | 0- 50 |
| 2 gew.-%ige wäßrige Dispersion von gereinigtem Hektorit | 100-300 |
| 15 gew.-%ige wäßrige ammoniakalische Kaseinlösung | 0-150 |
| mit Wasser auffüllen auf | 1000 |
| erfindungsgemäße 30 gew.-%ige Acrylat-dispersionen (auch Mischungen derselben, Filmhärte °Shore A 75-99) | 300-350 |
| 30 gew.-%ige Mattierungspaste auf Basis Kieselsäure | 0- 30 |
| Vernetzer auf Aziridin- oder Epoxidbasis | 0- 32 |
|  | ca. 1000 |

Zurichtungen mit den erfindungsgemäßen Polyacrylatdispersionen zeichnen sich insbesondere durch ein ausgezeichnetes Millverhalten aus :

Man kann die Leder nahezu beliebig lange bis zum gewünschten Weichheitsgrad der Leder millen, ohne daß die Appretur reißt wie bei Collodiumappreturen oder die Zurichtschicht wulstig und losnarbig wird wie bei Polyurethan-Appreturen. Man erhält schließlich sehr weiche Leder mit feinem Narbenwurf, Narbenkorn und kleinen Flämen. Selbst sehr stark gedeckte Leder, wie geschliffene Möbelleder, sehen sehr natürlich und unbeschichtet aus.

Weitere Vorteile des erfindungsgemäßen Zurichtverfahrens sind :

gutes Eindringvermögen der Grundierflotten ins Leder, sehr guter Verlauf der Zurichtflotten, große Elastizität, gute Trocken- und Naßknickfestigkeiten, gute Trocken- und Naßhaftungen, sehr gute Reibechtheiten, heißwasserquellfest, umweltfreundlich.

Von besonderem Vorteil für das erfindungsgemäße Verfahren ist es, wenn der mittlere Teilchendurchmesser der Polymerisatdispersionen kleiner als 100 nm ist.

In der EP-A 0 156 971 wird die Zurichtung von Leder mit wäßrigen Polyacrylat-Copolymer-Dispersionen beschrieben, die durch Polymerisation in Gegenwart von anorganischen Initiatoren erhalten werden.

In der EP-A 0 065 253 wird die Zurichtung von Leder mit wäßrigen (Meth)Acrylester-Copolymer-Dispersionen beschrieben, die durch Polymerisation in Gegenwart von anorganischen Initiatoren und einer Kombination spezieller anionisther Emulgatoren erhalten werden

## Beispiel 1

Für die Zurichtung von Schafnappa-Bekleidungsleder (Farbton mittelbraun) wendet man als Grundierbinder eine Polymerisatdispersion (I) an, die wie folgt hergestellt wird :

## Polymerisatdispersion I

In einem 4 l Glaskolben wird eine Lösung von 3 g Na-dodecylbenzolsulfonat in 575 g Wasser auf 70°C erhitzt, mit Stickstoff gespült und mit 5 Gew.-% einer Mischung von 588 g Ethylacrylat und 12 g Methacrylsäure versetzt. Die Aktivierung erfolgt mit 0,3 g t-Butylhydroperoxid, 1,8 g Na-formaldehydsulfoxylat in Gegenwart geringer Mengen Eisen-II-sulfat. Nach Anspringen der Polymerisation werden die restlichen 95 Gew.-% der Monomerenmischung gleichmäßig über einen Zeitraum von 4 h zudosiert. Parallel hierzu erfolgt ein wäßriger Zulauf, bestehend aus 21 g Na-dodecylbenzolsulfonat, 0,6 g t-Butylhydroperoxid und 718 g Wasser. Die Polymerisation erfolgt bei 70°C. Nach insgesamt 5 h beträgt der Feststoffgehalt 30,8 Gew.-% (= 94% Umsatz). Die Restmonomeren werden durch Entgasen entfernt. Der pH-Wert wird mit Ammoniakwasser auf 8 und die Endkonzentration auf 30 Gew.-% gestellt. Die Filmhärte beträgt °Shore A 26, die Teilchengröße des Latex <100 nm.

Mit der erhaltenen Polyacrylatdispersion (I) wird die Grundierungsflotte wie folgt angesetzt:

100 Gewichtsteile einer nach Beispiel 4 des EP-A 86 354 hergestellten Eisenoxid-Farbpastenmischung werden mit 100 Gewichtsteilen einer handelsüblichen 15 gew.-%igen wäßrigen Kasein-Fettemulsion und 40 Gewichtsteilen einer 20 gew.-%igen wäßrigen Paraffin-Ölsäureemulsion verrührt. In dieses Gemisch werden 550 Gewichtsteile Wasser und anschließend 210 Gewichtsteile der oben beschriebenen 30 gew.-%igen Polymerisatdispersion (I) eingerührt.

Die zu behandelnden Schaffelle erhalten 2 bis 4 Aufträge mittels einer Spritzmaschine. Die Auftragsmenge beträgt insgesamt 60 bis 100 g pro m² Lederoberfläche. Handelt es sich um sehr grobporige Leder, werden die Felle nach dem zweiten Farbauftrag und Trocknen bei 60°C und 100 bar zwischengebügelt.

Nach der Grundierung wird als Appreturbindemittel eine Polymerisatdispersion (II) angewendet, die wie folgt hergestellt wird.

Polymerisatdispersion II

Die Herstellung erfolgt wie bei der Polymerisatdispersion I, jedoch werden als Monomere eingesetzt:

312 g n-Butylacrylat, 168 g Methylmethacrylat, 108 g Acrylnitril und 12 g Methacrylsäure. Der wäßrige Zulauf besteht aus 15 g Na-dodecylbenzolsulfonat, 0,6 g t-Butylhydroperoxid und 716 g Wasser.

Nach einer Polymerisationszeit von insgesamt 5 h beträgt der Feststoffgehalt 31,5 Gew.-% (= 96% Umsatz). Die Restmonomeren werden durch Entgasen beseitigt. Der pH-Wert wird mit Ammoniakwasser auf 8 und die Endkonzentration auf 30% gestellt. Die Filmhärte beträgt °Shore A 72, die Teilchengröße des Latex <100 nm.

Mit der erhaltenen Polymerisatdispersion (II) wird die Appreturflotte wie folgt angesetzt:

300 Gewichtsteile der 30 gew.-%igen Polymerisatdispersion (II) werden mit 200 Gewichtsteilen einer 2 gew.-%igen wäßrigen Dispersion eines handelsüblichen Hektorits angedickt. Das Gemisch wird mit 470 bis 490 Gewichtsteilen Wasser verdünnt und anschließend zur Einstellung der gewünschten Mattstufe mit 10 bis 30 Gewichtsteilen der in EP-A-86 354, Beispiel 3 beschriebenen Mattierungspaste versetzt.

Zur Regulierung des Griffes können übliche Griffmittel, z.B. Siliconöl-, Fettsäureamid- oder Wachsemulsionen, dem Appreturansatz zugesetzt werden oder auch separat als Lüster auf die appretierten Leder aufgespritzt werden.

Die Appreturflotte wird mit 1 bis 2 Spritzaufträgen auf die Leder aufgebracht. Nach dem Trocknen werden die Felle auf gleiche Stärke trocken gefalzt und anschließend 6 bis 12 Stunden gemillt. Wird ein sehr glatter Ledergriff gewünscht, werden die Felle zum Schluß auf einer für Kleintierfelle üblichen Zylinderbügelmaschine bei 60°C und niedrigem Druck gebügelt.

Die erhaltene Zurichtung besitzt die in der Beschreibung angegebenen vorteilhaften Eigenschaften. Die Leder erscheinen trotz starker Deckung sehr natürlich und nicht beschichtet und werden durch die Zurichtung nicht verhärtet. Der Griff der Leder ist auch ohne Zusatz von Griffmitteln in der Appreturflotte angenehm und natürlich. Die Naß- und Trockenreibfestigkeiten sind besser als bei Zurichtungen mit üblichen Polymerisatdispersionen in der Grundierung und wäßrigen Collodiumlackemulsionen in der Appretur.

Beispiel 2

Zum Zurichten von vollnarbigen Rindnappaledern für Schuhe setzt man als Grundierbinder eine Polymerisatdispersion (III) ein, die nach Beispiel 1 mit folgender Monomerenmischung hergestellt wurde.

Polymerisatdispersion III

Monomerenmischung:
68 Gew.-% n-Butylacrylat, 12 Gew.-% Methacrylsäuremethylester, 18 Gew.-% Acrylnitril und 2 Gew.-% Methacrylsäure.

Mit der Polymerisatdispersion (III), Filmhärte °Shore A 38, wird die Grundierungsflotte wie folgt angesetzt:

100 Gewichtsteile einer nach den Beispielen 1, 4 und 5 der EP-A-86 354 hergestellten Farbpastenmischung im Farbton Cyclame werden mit 100 Gewichtsteilen einer handelsüblichen 15 gew.-%igen wäßrigen Kasein-Fettemulsion verrührt. Anschließend werden 490 Gewichtsteile Wasser, 290 Gewichtsteile der oben beschriebenen Polymerisatdispersion (III) und zum Schluß 20 Gewichtsteile der in EP-OS 86 354, Beispiel 3 beschriebenen Mattierungspaste zugesetzt.

Die zu behandelnden Schuhoberleder erhalten zwei Farbaufträge auf einer Spritzmaschine mit Zwischentrocknung bei 70 bis 80°C, wobei der erste Auftrag besonders satt gespritzt wird. Nach dem Trocknen werden die Leder bei 80°C und 50 bar zwischengebügelt und bekommen mit gleicher Flotte einen weiteren Spritzauftrag. Auftragsmenge insgesamt : 80 bis 120 g pro m². Nach dem letzten Spritzauftrag und Trocknen werden die Leder bei 90°C und 200 bar und einer Verweilzeit von 5 Sekunden mit einem Wildziegennarben geprägt.

Anschließend wird Effekt gespritzt mit einem Farbansatz, der wie folgt hergestellt wird :

15 Gewichtsteile einer handelsüblichen 15 bis 20 gew.-%igen wäßrigen Farbstofflösung und 50 Gewichtsteile einer Farbpastenmischung aus 15 bis 20 gew.-%igen organischen Pigmentformierungen, hergestellt nach Beispiel 5 der EP-A-86 354 und der in Beispiel 1 des gleichen Patentes beschriebenen $TiO_2$-Anreibung in einem dunkler als die Grundierung eingestellten Farbton werden mit 40 Gewichtsteilen einer 15 gew.-%igen wäßrigen ammoniakalischen Kaseinlösung, 250 Gewichtsteilen einer 2 gew.-%igen wäßrigen Dispersion von gereinigtem Hektorit und 265 Gewichtsteilen Wasser bis zur völligen Homogenität miteinander verrührt. In diese Mischung werden 240 Gewichtsteile der in der Grundierung verwendeten weichen Polymerisatdispersion (III) und 110 Gewichtsteile der härteren Polymerisatdispersion (IV), die in diesem Beispiel als Appreturmittel Verwendung findet, eingerührt.

Zum Schluß können kurz vor der Verarbeitung der Flotte 10 Gewichtsteile 1,2,4-Triglycidyltriazolidin-3,5-dion gelöst in 20 Gewichtsteilen Wasser dem Ansatz zur Vernetzung zugesetzt werden.

Die fertige Effektfarbe wird mit der Spritzmaschine in 2 bis 3 Maschinendurchgängen aufgetragen.

Anschließend erfolgt der Appreturauftrag mit der Polymerisatdispersion (IV), die gemäß Beispiel 1 mit folgender Monomerenzusammensetzung hergestellt wurde.

## Polymerisatdispersion IV

Monomerenzusammensetzung :
48 Gew.-% n-Butylacrylat, 32 Gew.-% Methacrylsäuremethylester, 18 Gew.-% Acrylnitril und 2 Gew.-% Methacrylsäure.

Mit der auf pH-Wert 8 gestellten 30 gew.-%igen Polymerisatdispersion (IV), Filmhärte °Shore A 88, wird der Appreturansatz wie folgt angesetzt :

5 Gewichtsteile handelsübliche 15 gew.-%ige Farbstofflösung werden mit 100 Gewichtsteilen einer 2 gew.-%igen wäßrigen Dispersion eines gereinigten Hektorits, 40 Gewichtsteilen einer 15 gew.-%igen wäßrigen ammoniakalischen Kaseinlösung und 495 Gewichtsteilen Wasser gut miteinander verrührt. In die homogene Mischung werden 300 Gewichtsteile der oben beschriebenen Polymerisatdispersion (IV) hineingegeben und kurz vor Anwendung können 20 Gewichtsteile 1,2,4-Triglycidyltriazolidin-3,5-dion gelöst in 40 Gewichtsteilen Wasser als Vernetzer zugesetzt werden.

Die Leder erhalten mit dem Appreturansatz einen Spritzauftrag, werden nach dem Trocknen klimatisiert und anschließend 6 Stunden gemillt. Dann erfolgt ein zweiter Appreturauftrag, jedoch diesmal ohne die Farbstofflösung. Zum Schluß werden die Leder bei 80°C, 100 bar und einer Verweilzeit von 1/2 Sekunde hydraulisch abgebügelt.

Die anwendungstechnischen Eigenschaften der Zurichtung entsprechen den im allgemeinen Teil beschriebenen vorteilhaften Eigenschaften. Die Leder wirken außerordentlich elegant im Aspekt und Griff und zeichnen sich durch ein großes physikalisches Echtheitsniveau, insbesondere bezüglich Knick- und Reibfestigkeiten aus. Die Leder erfüllen damit im hohen Maße alle Forderungen, die an ein Schuhoberleder gestellt werden.

## Beispiel 3

Zum Zurichten von vollnarbigen Nappaledern für Polstermöbel setzt man in der Grundierung eine Polyacrylatdispersion (V) ein. Diese wird gemäß Beispiel 1 mit folgender Monomerenzusammensetzung hergestellt.

## Polymerisatdispersion V

Monomerenzusammensetzung :
73 Gew.-% n-Butylacrylat, 18 Gew.-% Acrylnitril, 7 Gew.-% Methacrylsäuremethylester und 2 Gew.-%

Methacrylsäure.

Mit der auf pH-Wert 8 gestellten 30 gew.-%igen Polymerisatdispersion (V), Filmhärte °Shore A 36, wird der Farbansatz für die Grundierung in folgender Weise hergestellt :

100 Gewichtsteile einer nach Beispiel 4 der EP-OS 86 354 hergestellten Eisenoxidpigment-Farbpastenmischung werden mit 100 Gewichtsteilen einer handelsüblichen 15 gew.-%igen wäßrigen Kasein-Fettemulsion verrührt. In dieses Gemisch werden der Reihe nach 490 Gewichtsteile Wasser, 290 Gewichtsteile der Polymerisatdispersion (V) und 20 Gewichtsteile der in EP-A-86 354, Beispiel 3 beschriebenen Mattierungspaste eingerührt.

Die vorgemillten und anschließend gespannten Möbelleder erhalten einen satten Farbauftrag mittels einer Spritzmaschine und nach dem Trocknen einen weiteren, aber weniger starken Auftrag. Die Auftragsmenge der Grundierung beträgt insgesamt 80 bis 120 g pro m². Nach dem letzten Grundierungsauftrag und Trocknen werden die Leder bei 80°C und 50 bar abgebügelt.

Anschließend wird die Schlußappretur mit der in Beispiel 2 angewendeten Polymerisatdispersion (IV) als Bindemittel aufgetragen.

Die Appreturflotte wird folgendermaßen hergestellt :

Zu einer homogen verrührten Mischung aus 150 Gewichtsteilen einer 2 gew.-%igen wäßrigen Dispersion eines gereinigten Hektorits und 50 Gewichtsteilen einer 15 gew.-%igen wäßrigen ammoniakalischen Kaseinlösung sowie 417 Gewichtsteilen Wasser werden 350 Gewichtsteile der 30 gew.-%igen Polymerisatdispersion (IV) und anschließend zur Regulierung der Glanzstufe 10 bis 30 Gewichtsteile der in EP-A-86 354, Beispiel 3 beschriebenen Mattierungspaste gegeben. Kurz vor Verarbeitung der Flotte werden zur Vernetzung 13 Gewichtsteile einer polyfunktionellen Aziridinverbindung unter gutem Rühren zugesetzt.

Der Appreturansatz wird in zwei Aufträgen mittels einer Spritzmaschine aufgesprüht. Die Leder werden bei 70°C zwischen- und schlußgetrocknet, anschließend 4 bis 12 Stunden gemillt und zum Schluß auf der Durchlaufbügelmaschine bei 140°C gebügelt.

Das erhaltene Leder ist sehr weich und wirkt wie unbeschichtet. Narbenkorn und Narbenwurf sind fein und die Flämen klein. Die Zurichtung weist alle für Polstermöbelleder geforderten Echtheiten, wie Elastizität, Reibfestigkeiten, Lichtechtheit und Aminbeständigkeit, auf.

## Beispiel 4

Zum Zurichten von geschliffenen Nappaleder für Polstermöbel wendet man in der Grundierung die Polymerisatdispersion (VI) an, die gemäß Beispiel 1 mit dem nachfolgend aufgeführten Monomerengemisch hergestellt wurde.

Polymerisatdispersion VI

Monomerenzusammensetzung :
84 Gew.-% n-Butylacrylat, 12 Gew.-% Acrylnitril und 4 Gew.-% Methacrylsäure.

Mit der auf pH-Wert 8 gestellten Polymerisatdispersion (VI), Filmhärte °Shore A 29, wird die Grundierungsflotte wie folgt angesetzt :

100 Gewichtsteile einer nach Beispiel 4 der EP-A-86 354 hergestellten Eisenoxidpigment-Farbpastenmischung werden mit 100 Gewichtsteilen einer handelsüblichen 15 gew.-%igen wäßrigen Kasein-Fettemulsion, 50 Gewichtsteilen einer 15 gew.-%igen wäßrigen ammoniakalischen Kaseinlösung und 20 Gewichtsteilen einer üblichen 60 gew.-%igen schwach kationisch emulgierten Erdnußölemulsion sowie 340 Gewichtsteilen Wasser innig miteinander verrührt. Zu dieser Mischung werden 350 Gewichtsteile der Polymerisatdispersion (VI) gegeben. Zum Schluß wird die Farbflotte zur Regulierung der Eindringtiefe in die Narbenschicht mit einem geeigneten Verdickungsmittel auf eine Viskosität gestellt, die einer Auslaufzeit von 16 bis 22 Sekunden im Fordbecher mit einer 4 mm Düse entspricht. Für schwach saugende Leder wird der Farbansatz gar nicht oder nur gering angedickt, stärker saugende Leder werden mit höher viskosen Flotten behandelt. Bei sehr stark saugenden Häuten werden die Leder vor den Farbaufträgen bei 70 bis 120°C und 100 bar auf einer Duchlaufbügelmaschine abgebügelt.

Nach Millen und Spannen erhalten die zu beschichtenden geschliffenen Möbelleder einen satten Farbauftrag auf einer Spritzmaschine, und nach dem Trocknen bei 70°C werden bis zur gewünschten Fülle und Farbegalität 1 bis 2 weitere Spritzaufträge gegeben. Die Farbauftragsmenge beträgt insgesamt 120 bis 180 g pro m² Lederoberfläche. Nach dem Trocknen werden die Häute bei 80°C und 120 bar mit 1 bis 4 Sekunden Verzögerung mit einem feinen Porennarben geprägt und erhalten dann eine Effektfarbe auf einer Walzenauftragsmaschine, die in folgender Weise fertiggestellt wird :

100 Gewichtsteile einer Farbpastenmischung aus 15 bis 20 gew.-%igen organischen Pigmentformierungen, hergestellt nach Beispiel 5 der EP-A-86 354 in einer zur Grundierung dunkler eingestellten Kontrastfarbe, werden mit 90 Gewichtsteilen einer 15 gew.-%igen wäßrigen ammoniakalischen Kaseinlösung, 50 Gewichtsteilen Wasser und 300 Gewichtsteilen einer 2 gew.-%igen wäßrigen Dispersion eines gereinigten Hektorits miteinander homogen verrührt. Zu dieser Mischung werden 225 Gewichtsteile der im Grundieransatz enthaltenden weichen Polymerisatdispersion (VI) und 225 Gewichtsteile der härteren Polyermisatdispersion (IV) unter gutem Rühren gegeben. Kurz vor der Anwendung werden in den Effektfarbenansatz 10 Gewichtsteile einer polyfunktionellen Aziridinverbindung zwecks Vernetzung eingerührt.

Die Effektfarbe wird auf die Häute in einem Maschinendurchgang, z.B. mit einem Wolkendessin, mit einer Walzenauftragsmaschine aufgebracht.

Anschließend erfolgt der Appreturauftrag und die Fertigstellung der Leder mit gleicher Rezeptur und Arbeitsweise wie in Beispiel 3.

Das Leder zeigt sämtliche für Polstermöbelleder erforderlichen Eigenschaften, wie tuchartiger weicher Griff, feiner Narbenwurf, kleine Flämen. Die Zurichtung ist elastisch, millfest, reibfest, lichtecht und aminbeständig.

## Ansprüche

1. Verfahren zur Zurichtung von Leder, dadurch gekennzeichnet, daß man für die Grundierung Acrylatbinder mit einer Filmhärte °Shore A von 20-40 aus (a) 56-98 Gew.-% eines $C_2$-$C_8$-Alkylacrylats (b) 2-4 Gew.-% (Meth)-Acrylsäure, (c) 0-25 Gew.-% Acrylnitril, (d) 0-40 Gew.-% Methylmethacrylat und (e) 0-5 Gew.-% eines oder mehrerer weiterer Comonomere, die keine sauren, basischen oder vernetzenden Gruppen aufweisen und für die Appretur Acrylatbinder mit einer Filmhärte °Shore A von 65 - 99 aus (a) 38 - 80 Gew.-% eines $C_2$-$C_8$-Alkylacrylats, (b) 2-4 Gew.-% (Meth)Acrylsäure, (c) 10-20 Gew.-% Acryl-nitril, (d) 0-40 Gew.-% Methylmethacrylat und (e) 0-5 Gew.-% eines oder mehrerer weiterer Comonomere, die keine sauren, basischen oder venretzenden Gruppen aufweisen, wobei die Acrylatbinder durch Copolymerisation der Monomeren in Gegenwart von 0,05-0,2 Gew.-% einer organischen Peroxoverbindung und 2,0-4,0 Gew.-% eines anionischen Emulgators hergestellt worden sind und die Prozentangaben sich auf die Summe von (a) bis (e) beziehen, verwendet.

2. Verfahren gemäß Anspruch 1, dadurch gekennzeichnet, daß man für die Grundierung Acrylatbinder aus (a) 65-98 Gew.-% eines $C_2$-$C_8$-Alkylacrylats, (b) 2-4 Gew.-%, (Meth)Acrylsäure, (c) 0-18 Gw.-%, Acrylnitril und (d) 0-15 Gew.-% Methylmethacrylat verwendet.

3. Verfahren gemäß den Ansprüchen 1-2, dadurch gekennzeichnet, daß man für die Appretur Acrylatbinder aus (a) 46-60 Gew.-% eines $C_2$-$C_8$-Alkylacrylats, (b) 2-4 Gew.-% (Meth)Acrylsäure, (c) 12-20 Gew.-% Acrylnitril und (d) 20-34 Gew.-% Methylacrylat verwendet.

4. Verfahren gemäß den Ansprüchen 1-3, dadurch gekennzeichnet, daß (a) Ethylacrylat oder n-Butylacrylat ist.

5. Verfahren gemäß den Ansprüchen 1-4, dadurch gekennzeichnet, daß (b) Methacrylsäure ist.

## Claims

1. Process for dressing leather, characterized in that acrylate binders having a °Shore A film hardness of 20-40 and consisting of (a) 56-98% by weight of a $C_2$-$C_8$-alkyl acrylate, (b) 2-4% by weight of (meth)acrylic acid, (c) 0-25% by weight of acrylonitrile, (d) 0-40% by weight of methyl methacrylate and (e) 0-5% by weight of one or more other comonomers containing no acid, basic or crosslinking groups are used for bottoming, and acrylate binders having a °Shore A film hardness of 65-99 and consisting of (a) 38-80% by weight of a $C_2$-$C_8$-alkyl acrylate, (b) 2-4% by weight of (meth)acrylic acid, (c) 10-20% by weight of acrylonitrile, (d) 0-40% by weight of methyl methacrylate and (e) 0-5% by weight of one or more other comonomers containing no acid, basic or crosslinking groups are used for finishing, the acrylate binders having been produced by copolymerization of the monomers in the presence of 0.05-0.2% by weight of an organic peroxo compound and 2.0-4.0% by weight of an anionic emulsifier, and the percentage data relating to the total of (a) to (e).

2. Process according to Claim 1, characterized in that acrylate binders consisting of (a) 65-98% by weight of a $C_2$-$C_8$-alkyl acrylate, (b) 2-4% by weight of (meth)acrylic acid, (c) 0-18% by weight of acrylonitrile and (d) 0-15% by weight of methyl methacrylate are used for bottoming.

3. Process according to Claims 1-2, characterized in that acrylate binders consisting of (a) 46-60% by weight of a $C_2$-$C_8$-alkyl acrylate, (b) 2-4% by weight of (meth)acrylic acid, (c) 12-20% by weight of acrylonitrile and (d) 20-34% by weight of methyl acrylate are used for finishing.

4. Process according to Claims 1-3, characterized in that (a) is ethyl acrylate or n-butyl acrylate.

5. Process according to Claims 1-4, characterized in that (b) is methacrylic acid.

## Revendications

1. Procédé pour la préparation de finissage ou corroyage, d'un cuir, procédé caractérisé en ce qu'on utilise pour le traitement d'apprêt de base un liant acrylique ayant une dureté de pellicule, en degrés Shore A, de 25 à 40 et comportant (a) 56 à 98% en poids d'un acrylate d'alkyle en $C_2$-$C_8$, (b) 2 à 4% en poids d'acide (méth)-acrylique, (c) 0 à 25% en poids d'acrylonitrile, (d) 0 à 40% en poids de méthacrylate de méthyle et (e) 0 à 5% en poids d'un ou plusieurs autres comonomères, ne présentant pas de groupes acides, de groupes basiques ou de groupes à rôle de réticulation et, pour l'apprêt de finissage, un liant acrylique ayant une dureté de pellicule en degrés Shore A de 65 à 99, liant comportant (a) 38 à 80% en poids d'un acrylate d'alkyle en $C_2$-$C_8$, (b) 2 à 4% en poids d'acide (méth)-acrylique, (c) 10 à 20% en poids d'acrylonitrile, (d) 0 à 40% en poids de méthacrylate de méthyle et (e) 0 à 5% en poids d'un ou plusieurs autres comonomères ne présentant pas de groupes acides, basiques ou à rôle de réticulation, les liants acryliques ayant été obtenus par copolymérisation des monomères en présence de 0,05 à 0,2% en poids d'un composé peroxo organique et de 2,0 à 4,0% en poids d'un émulsifiant anionique, et les données de pourcentages se rapportant à la somme des constituants de (a) à (e).

2. Procédé selon la revendication 1, caractérisé en ce qu'on utilise pour le traitement de préparation de base, un liant acrylique constitué par (a) 65 à 98% en poids d'un acrylate d'alkyle en $C_2$-$C_8$, (b) 2 à 4% en poids d'acide (méth)-acrylique, (c) 0 à 18% en poids d'acrylonitrile et (d) 0 à 15% en poids de méthacrylate de méthyle.

3. Procédé selon les revendications 1 et 2, caractérisé en ce qu'on utilise pour l'apprêt de finissage un liant acrylique constitué par (a) 46 à 60% en poids d'un acrylate d'alkyle en $C_2$-$C_8$, (b) 2 à 4% en poids d'acide (méth)-acrylique, (c) 12 à 20% en poids d'acrylonitrile et (d) 20 à 34% en poids d'acrylate de méthyle.

4. Procédé selon les revendications 1 à 3, caractérisé en ce que l'acrylate (a) est de l'acrylate d'éthyle ou de l'acrylate de n-butyle.

5. Procédé selon les revendications 1 à 4, caractérisé en ce que l'acide (b) est l'acide méthacrylique.